Europäisches Patentamt

**European Patent Office**

Office européen des brevets

(19)

(11) Numéro de publication: **0 082 903**
**B1**

(12) **FASCICULE DE BREVET EUROPEEN**

(45) Date de publication du fascicule du brevet:
**13.05.87**

(51) Int. Cl.⁴: **G 06 F 13/00,** G 06 F 13/14,
G 06 F 9/26

(21) Numéro de dépôt: **81430046.3**

(22) Date de dépôt: **29.12.81**

(54) **Unité de commande pouvant être connectée à deux mémoires de vitesses différentes.**

(43) Date de publication de la demande:
**06.07.83 Bulletin 83/27**

(45) Mention de la délivrance du brevet:
**13.05.87 Bulletin 87/20**

(84) Etats contractants désignés:
**DE FR GB**

(56) Documents cités:
**EP - A - 0 010 193**
**FR - A - 2 215 877**
**US - A - 3 984 812**

**IBM TECHNICAL DISCLOSURE BULLETIN, vol. 7, no.9, février 1965, pages 754-755; New York US. PITKOWSKY et al.: "Data processing system clock control"**
**IBM TECHNICAL DISCLOSURE BULLETIN, vol. 20, no. 7, décembre 1977, page 2801, New York, USA. D. A. HEUER et al.: "Memory wait stops microprocessor while memory cycle occurs"**
**IBM TECHNICAL DISCLOSURE BULLETIN, vol. 11, nr. 1, juin 1968, pages 67-70, New York, USA. L. R. PALOUNEK: "Memory allocation and addressing"**

(73) Titulaire: **International Business Machines Corporation, Old Orchard Road, Armonk, N.Y. 10504 (US)**

(72) Inventeur: **Lechaczynski, Michel, 17, Avenue Georges Clémenceau, F-06000 Nice (FR)**
Inventeur: **Pauporte, André, Lotissement du Colombier, F-06480 La Colle sur Loup (FR)**
Inventeur: **Thery, Pierre, Villa Sunny Land Allée Venet, F-06160 Juan-les-Pins (FR)**
Inventeur: **Waller, Richard, 205 Bennington Dr., Chapel Hill North Carolina (US)**

(74) Mandataire: **Lattard, Nicole, Compagnie IBM France Département de Propriété Intellectuelle, F-06610 La Gaude (FR)**

## Description

La présente invention concerne une unité de traitement de données dans laquelle un dispositif permet la connexion simultanée de deux mémoires de commande, de vitesses différentes pour augmenter la vitesse des opérations de lecture/écriture.

A l'heure actuelle, les unités de traitement de données de dimensions importantes nécessitent l'emploi de mémoires de commande de grande capacité. Généralement les mémoires de grande capacité ne sont pas très rapides et en conséquence les opérations faisant intervenir la mémoire ralentissent la vitesse de traitement. Les mémoires rapides étant coûteuses, l'emploi de plusieurs mémoires rapides s'avérerait trop onéreux.

### Art Antérieur

Pour résoudre ce problème, il est connu d'utiliser une mémoire de commande de grande capacité et une mémoire intermédiaire rapide appelée cache, dans laquelle sont stockés temporairement des groupes d'instructions et de données avec lesquels travaillent un programme. Ce système de cache tel que décrit dans le brevet français FR-A-2 023 152, nécessite des moyens importants pour la gestion du cache afin de permettre au système de traitement, de savoir où il va trouver à un moment donné, les instructions ou données dont il a besoin. Il faut aussi réaliser des opérations de transfert entre la mémoire de commande et le cache, opérations qui prennent du temps.

Les systèmes de cache s'avèrent intéressants dans certaines applications notamment les gros systèmes, mais du fait de la complexité de leur mise en œuvre, leur utilisation n'est pas toujours justifiée.

### Résumé de l'Invention

La présente invention a donc pour objet de réaliser une unité de commande simple qui présente les avantages de rapidité des unités de traitement de données faisant usage d'un cache.

L'unité de commande conforme à la présente invention fonctionne au rythme d'une horloge sous contrôle d'un programme d'instructions emmagasiné dans une unité d'emmagasinage attaché à l'unité de commande par des bus d'adresses, de données et de contrôle. L'unité d'emmagasinage comprend au moins une mémoire rapide qui est affectée au stockage des instructions du programme et de données les plus fréquemment utilisées et au moins une mémoire lente de grande capacité qui est affectée au stockage des instructions du programme et de données plus rarement utilisées, lesdites mémoires étant adressées par les informations d'adresses envoyées par l'unité de commande sur le bus d'adresses. Dans l'unité de commande des moyens sont prévus pour générer un signal d'arrêt d'horloge lorsque des opérations nécessitant l'utilisation des mémoires sont en cours et que la mémoire concernée par l'opération est occupée.

### Brève Description des Figures

La fig. 1 représente le schéma général d'un contrôleur de communication dans lequel peut être incorporé la présente invention.

La fig. 2 représente l'organisation de l'unité de commande centrale et des mémoires conformément à l'invention.

La fig. 3 représente le schéma de circulation de données de l'unité de commande centrale.

La fig. 4 représente le circuit de génération des mots de commande machine.

La fig. 5 représente le dispositif de gestion des mémoires lente et rapide permettant de générer les signaux de contrôle nécessaires.

La fig. 6 représente le schéma détaillé du circuit 51 de la fig. 5.

La fig. 7 représente le diagramme des temps dans l'unité CCU pendant l'exécution d'une opération de chargement d'un mot entier.

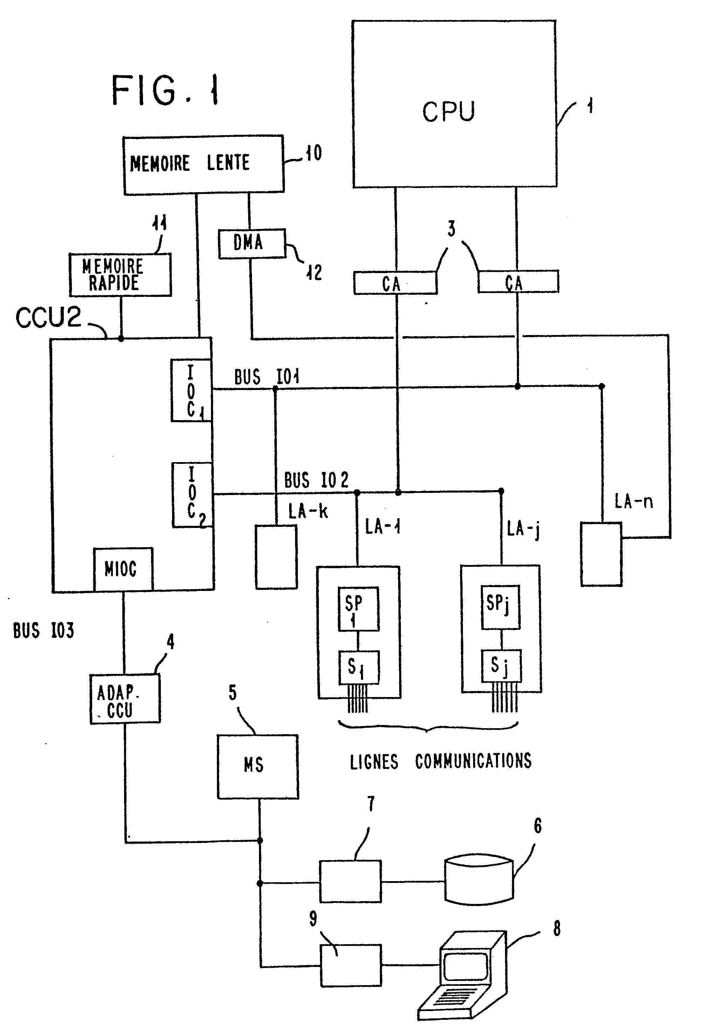

Avant de passer à la description détaillée de l'invention, on va décrire en référence à la fig. 1 à titre d'exemple un système de traitement de données dans lequel elle peut être mise en œuvre.

La fig. 1 représente de façon schématique un contrôleur de communications qui contrôle l'échange de données entre des terminaux connectés aux lignes de communications et au moins un système de traitement central CPU, 1.

Pour qu'un échange ait lieu dans le sens terminaux, vers système central CPU, le contrôleur a pour fonction de balayer les lignes de communication, de multiplexer les données arrivant sur ces lignes et de transmettre le train de données ainsi obtenu au système central par un canal grande vitesse.

Pour qu'un échange ait lieu dans le sens système central vers terminaux, le contrôleur reçoit les données multiplexées à transmettre à partir du système central sur le canal à grande vitesse, démultiplexe les données et les achemine aux terminaux désirés désignés par adressage.

Le contrôleur comprend une unité de commande centrale CCU 2, qui est du même type que celle utilisée dans le contrôleur de communications IBM 3705. Cette unité est un processeur qui fonctionne sous commande d'un programme de contrôle de réseau à plusieurs niveaux d'interruption. Chaque évènement lorsqu'il se produit crée une interruption à un niveau donné du programme, qui fait que le code de traitement de l'évènement se déroule. Conformément à l'invention, l'unité de commande est associée à deux mémoires, une mémoire 10 de grande capacité et donc relativement lente et une mémoire 11, très rapide.

Deux bus d'entrée/sortie BUS I01 et BUS I02 sont attachés à l'unité de commande centrale par des interfaces IOC1 et IOC2. Le système de traitement central est connecté aux bus I01 et I02 par un adaptateur de canaux CA 3.

Des adaptateurs de lignes LA-1 à LA-n sont connectés parallèlement aux bus d'entrée/sortie BUS I01 et BUS I02. Chaque adaptateur assure le balayage d'une partie des lignes de communications à gérer par le contrôleur. En conséquence, le nombre des adaptateurs varie suivant la configuration du réseau. On supposera que l'adaptateur LA-n est un adaptateur grande vitesse qui peut gérer une liaison satellite. Cet adaptateur particulier a un accès direct à la mémoire lente par l'intermédiaire d'un système à accès direct à la mémoire DMA 12.

Les adaptateurs de lignes comportent un dispositif de balayage S proprement dit qui comporte des mémoires dans lesquelles sont stockées les données reçues ou à transmettre et un microprocesseur pré-programmé SP qui permet de décharger l'unité de commande centrale de certaines fonctions, notamment celles qui concernent le traitement des données sur les lignes connectées à l'adaptateur de lignes associé.

Un système de maintenance et de service MS 5 est connecté à l'unité centrale CCU 2 par un adaptateur 4, un bus d'entrée/sortie BUS I03 et un interface MIOC. Ce système de maintenance et de service est aussi un processeur avec un microcode de commande. Il est connecté à une unité à disque 6 par un adaptateur 7 et à une console 8 comportant un écran d'affichage et un clavier, par un adaptateur 9.

Ce système de maintenance et de service a trois fonctions, il permet à l'opérateur de surveiller le contrôleur, en contrôlant et analysant les actions effectuées et faciliter le dépannage en permettant l'isolement et la séparation des erreurs de programmation et des pannes à la fois dans le contrôleur et dans le système de maintenance lui-même. De plus, il est utilisé pour exécuter des services notamment le chargement initial des programmes IPL, la lecture et l'écriture de registres.

Des routines de diagnostic à la disposition du personnel de maintenance résident dans le fichier de l'unité à disque, pour trouver les pannes, elles peuvent être appelées même si le système central, le canal ou le contrôleur est en panne.

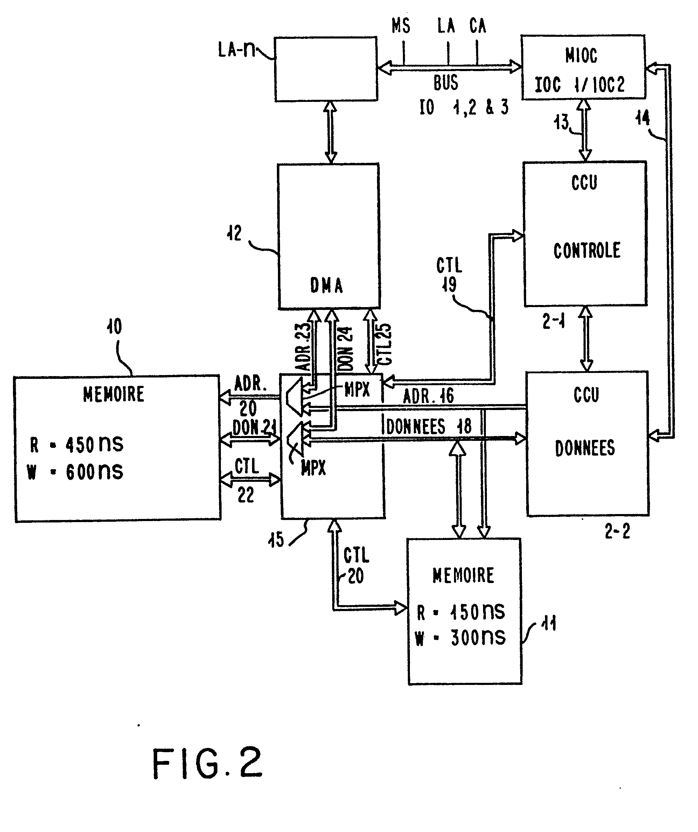

Sur la fig. 2 est représentée l'organisation de l'unité de commande centrale CCU 2 et des mémoires 10 et 11.

L'unité de commande centrale CCU 2 comporte des circuits de contrôle 2–1 et des circuits de circulation de données 2–2.

Les interfaces d'entrée-sortie IOC1, IOC2 et MIOC sont connectés aux circuits de contrôle 2–1 par le bus 13 et aux circuits de circulation de données par le bus 14.

Les bus I01 et I02 et I03 sur lesquels sont attachés les adaptateurs de canaux et de lignes et le système de maintenance MS sont connectés aux interfaces IOC1, IOC2 et MIOC. L'adaptateur grande vitesse LA-n qui est aussi connecté à un bus d'entrée/sortie peut communiquer directement avec la mémoire 10 par le mécanisme d'accès direct à la mémoire DMA 12. Un circuit de contrôle de mémoire 15 contrôle les opérations d'adressage pour la lecture et l'écriture des mémoires 10 et 11.

La mémoire rapide 11 est attachée aux bus d'adresses et de données 16 et 18 respectivement, qui permettent à l'unité de commande 2–2 d'envoyer les informations d'adressage des mémoires 10 ou 11 et d'effectuer les opérations de lecture ou d'écriture de données dans ces mémoires sous contrôle de signaux sur le bus de contrôle CTL 19 transmis à la mémoire rapide 11 par le circuit de contrôle de mémoire 15 et le bus 20.

La mémoire lente est reliée au circuit de contrôle de mémoire 15 par des bus d'adresse et de données 20 et 21 et un bus de contrôle CTL 22. Le circuit de contrôle de mémoire 15 comporte des circuits de multiplexage MPK d'adresse et de données qui permettent à la mémoire lente d'être accédée soit par l'unité de commande centrale CCU soit par l'adaptateur grande vitesse directement. L'adaptateur grande vitesse accède au circuit de contrôle de mémoire 25 par les bus d'adresses, des données et de contrôle 23, 24 et 25 respectivement.

Dans un mode de réalisation préféré de l'invention l'unité de commande centrale a une durée de cycle de 150ns. La capacité de la mémoire rapide est choisie égale à 128 kilobytes et celle de la mémoire lente de 4 Mégabytes. La durée du cycle de lecture R de la mémoire rapide est égale à un cycle de l'unité centrale CCU et la durée du cycle d'écriture W est égale à deux cycles de l'unité centrale CCU. Par contre la durée du cycle de lecture de la mémoire lente est égale à trois cycles de l'unité de commande centrale CCU et la durée du cycle d'écriture est égale à quatre cycles de l'unité de commande centrale.

Le programme de commande est divisé en deux. Le code utilisé fréquemment tel que le code superviseur du programme de commande de réseau résidant dans l'unité de traitement centrale CPU et le code de traitement des procédures de lignes seront placés dans la mémoire rapide.

Le code rarement utilisé tel que les routines de traitement d'erreurs, sera placé dans la mémoire lente de même les données seront divisées entre les deux mémoires. Les données fréquemment utilisées comme les constantes seront situées en mémoire rapide, ainsi que les zones servant à stocker les données à envoyer ou reçues des lignes à grande vitesse, les autres données étant en mémoire lente.

En conséquence, les contenus des deux mémoires sont connus et il n'est pas nécessaire de prévoir des moyens de gestion du contenu de la mémoire rapide comme c'est le cas avec le cache.

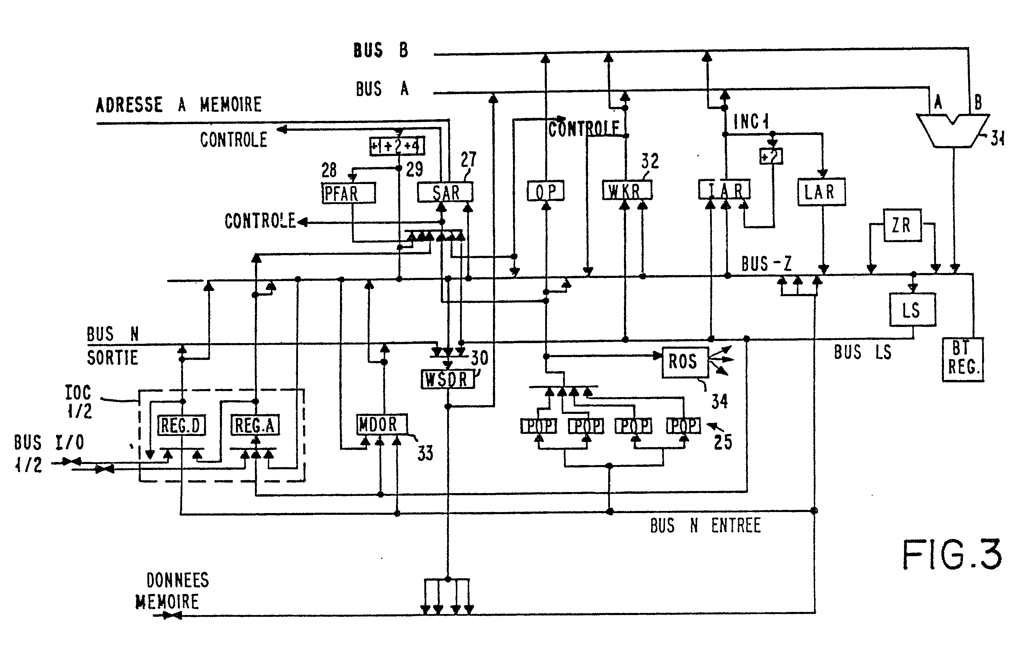

On va maintenant décrire en référence à la fig. 3, le schéma de circulation des données 2–2 d'une unité de contrôle, qui permet d'exécuter un jeu d'instructions constitué par les cinquante et une instructions du contrôleur IBM 3705 auxquelles ont été ajoutées deux instructions supplémentaires qui seront données ultérieurement. Les circuits 2–2 permettent d'adresser la mémoire, de réaliser le traitement logique et arithmétique des données et de commander les adaptateurs qui sont attachés à cette unité.

Ces circuits 2–2 comprennent une mémoire locale LS dans laquelle sont définis à des positions d'adresses données, quarante registres généraux utilisés par le programme de contrôle pour l'exécution des instructions et le traitement de données. Ces registres sont répartis en cinq groupes de huit registres. Chaque groupe est affecté à un niveau de programme parmi les cinq niveaux de programme. Ceci permet au programme à un niveau d'être interrompu à un autre niveau sans qu'il soit nécessaire de sauver le contenu des registres.

Elle comporte de plus des registres externes qui sont utilisés pour emmagasiner des informations nécessaires pour la communication entre le programme de commande et les circuits proprement dits. Ces registres externes contiennent de l'information intéressant le fonctionnement des circuits et/ou du programme. En utilisant une instruction d'entrée le programme de commande peut charger le contenu d'un registre externe dans un registre général où il peut opérer sur les données. Des instructions de sortie permettent de charger un registre externe avec le contenu du registre général déterminé par l'instruction. Ces registres sont les suivants:

Un registre d'adresse antérieur LAR qui contient l'adresse de la dernière instruction exécutée avant l'instruction en cours d'exécution. Ce registre LAR est chargé à partir du registre d'adresse d'instructions IAR au début de l'exécution de chaque instruction. Un incrémenteur INC1 permet de faire passer le registre IAR à une valeur pointant sur l'adresse suivante.

Un registre d'opération OP, est utilisé pour stocker les seize premiers bits (½ mot) de l'instruction en cours d'exécution. Ce registre est chargé à partir de quatre registres de «recherche à l'avance» POP A–B 25 qui permettent de rechercher les instructions dans la mémoire principale connectée à l'unité de commande.

Il comprend un registre d'adresse de mémoire SAR 27 (22 bits données + 3 parités), un registre d'adresse d'instructions recherchées à l'avance PFAR 28 avec un incrémenteur d'adresses, un registre d'écriture de données en mémoire WSDR 30. Une unité arithmétique et logique 31 permet d'effectuer les opérations arithmétiques et logiques commandées par le programme, cette unité étant associée à des registres de travail WKR 32. Le registre ZR permet de stocker les données sur le bus Z.

L'interface MIOC communique avec l'unité CCU par un registre MDOR 33 de données de maintenance.

Les interfaces IOC ½ comprennent deux registres: Un registre D, à 18 bits (16 bits information + 2 bits parité). C'est un registre tampon permettant l'échange de toutes les adresses, commandes et données de et vers les adaptateurs, un registre A à 25 bits (22 bits d'information + 3 bits de parité).

La mémoire morte 34 contient des mots de commande CW qui sont nécessaires pour contrôler les opérations à réaliser par l'unité de commande.

Cette unité étant du même type que celle du contrôleur de communication IBM 3705, ne sera pas décrite plus en détail. Le chemin des données dépend du déroulement des instructions du programme en mémoire.

Les deux instructions qui ont été ajoutées au jeu d'instruction du contrôleur IBM 3705 sont les suivantes:

la première de ces instructions est une instruction d'entrée/sortie adaptateur IOH du type RR (registre à registre) de format suivant:

| 0 | R2 | 0 | R1 | X «50» |
|---|----|---|----|--------|
| 0 | 1  3 | 4 | 5  7 | 8        15 |

Cette instruction provoque le transfert du contenu du registre déterminé par le champ R1 à un adaptateur, canal ou ligne déterminé par le contenu du champ R2 ou vice-versa. Cette instruction est exécutable aux niveaux de programme 1, 2, 3 et 4 seulement. Si on essaie de l'exécuter au niveau 5, il en résultera une demande d'interruption au niveau 1. Si le processeur ne reçoit pas de réponse valide à l'intérieur d'un temps prédéterminé, une interruption de niveau 1 «NON RÉPONSE ADAPTATEUR» se produit. Les registres de l'unité de commande ne sont pas adressables par cette instruction. X «50» signifie que 50 est un nombre hexadécimal.

La seconde de ces instructions est une instruction d'entrée/sortie valeur immédiate IOH du type RA, de format suivant:

| 00000 | R1 | X «70» | |
|--------|----|--------|---|
| 0    4 | 5  7 | 8        15 | 16        31 |

Cette instruction transfère le contenu du registre déterminé par R1 à un registre externe ou vice-versa. Le registre de l'adaptateur externe est déterminé par le contenu du second demi mot de l'instruction. Cette instruction peut être utilisée pour adresser les adaptateurs de canaux et de ligne.

Le système de maintenance MS 5 est accédé par une instruction du même type MIOH. Cette instruction au lieu d'utiliser les registres A et B de l'interface IOC, utilise le registre MDOR pour les données et un registre LSAR dans la mémoire locale pour les informations d'adresse.

Dans l'unité de commande centrale la mémoire morte ROS contrôle tous les composants: unité logique et arithmétique, registres, accès à la mémoire locale ou à la mémoire principale. En conséquence, l'affectation de cette mémoire morte à l'un des dispositifs utilisateurs entraîne l'attribution de toutes les ressources de l'unité de commande à cet utilisateur. En effet, l'unité de commande fonctionne sous contrôle du programme emmagasiné dans les mémoires principales 10 et 11. Lors de l'exécution d'une instruction, le décodage du code opération de l'instruction provoque l'adressage d'un ou plusieurs mots de commande stockés dans la mémoire morte, qui contrôlent le fonctionnement des différents composants.

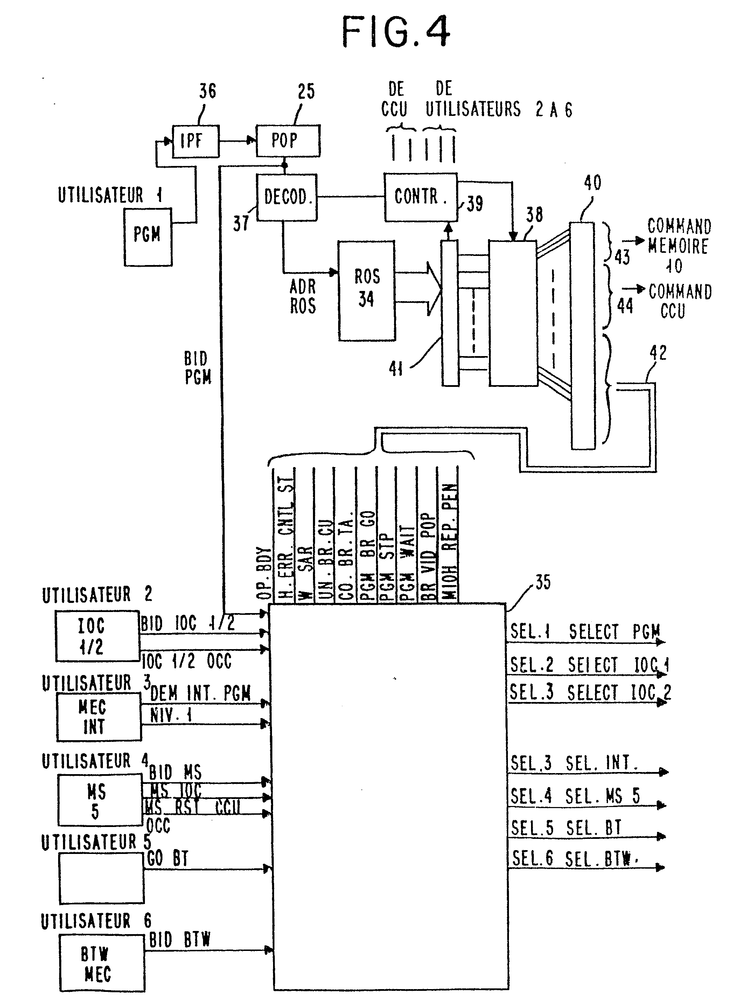

Sur la fig. 4 est illustré de façon très générale comment à partir des appels BID émis par les différents utilisateurs, sont générés des signaux de sélection pour affecter la mémoire à un utilisateur sélectionné, sur une base de priorité et de partage du temps entre les utilisateurs réalisant des opérations longues.

L'utilisateur 1 est le programme PGM dans les mémoires principales qui envoie au dispositif de sélection 35 un signal d'appel BID PGM suite au chargement des registres POP 25.

L'utilisateur 2 est constitué par les interfaces IOC 1 et 2. Cette utilisateur permet aux adaptateurs de communiquer avec l'unité de contrôle par deux types d'opérations: AIO d'une part, opération déclenchée par l'adaptateur et PIO d'autre part, opération déclenchée par le programme utilisant les instructions IOH et IOHI. Deux signaux sont fournis au dispositif 32, à savoir un signal d'appel IOC ½ et un signal indiquant que l'interface est occupée. IOC ½ OCC.

L'utilisateur 3 est le mécanisme d'interruption MEC. INT. permettant de quitter un niveau de programme pour passer à un niveau de programme de priorité plus élevée. Ce mécanisme fournit deux indications au dispositif 35, un signal de demande d'interruption de programme DEM INT PGM, et un signal indiquant que les opérations se déroulent au niveau 1, NIV 1 et qu'en conséquence, toute demande d'interruption doit être sélectionnée.

L'utilisateur 4 est le système de maintenance MS 5 qui envoie un signal de demande proprement dit BID MS et deux autres signaux, un signal indiquant que le système MS demande une opération qui nécessite l'utilisation de l'interface IOC ½, MS IOC et un signal envoyé par le système de maintenance pour terminer une opération précédente dudit système dans l'unité de commande: CCU MS RST CCU OCC.

L'utilisateur 5 est un mécanisme d'établissement d'une table de débranchement BT MEC qui permet de constituer en mémoire une table des adresses des débranchements faits par le programme de commande, il envoie un signal d'appel GO BT.

L'utilisateur 6 est un mécanisme de rebouclage de la table de débranchement BTW MEC qui permet de reboucler la table dans laquelle sont enregistrés les débranchements, à son début quand elle est pleine. Ce mécanisme envoie un signal d'appel BID BTW.

Pour que les différents appels puissent être sélectionnés par le dispositif 35 il faut aussi tenir compte de signaux de commande venant de l'unité de contrôle. Ces signaux sont les suivants:
«Limite opération» (OP BDY):
signal actif pendant le dernier cycle de toute opération de l'unité de commande.
«Arrêt commandé par erreur matériel» (H.ERR.CNT.ST.):
signal actif lorsqu'une erreur matérielle arrêtant l'unité de commande est rencontrée.

«Ecrire registre SAR» (W SAR):
signal actif lorsque le registre d'adresse d'instruction est écrit.
«Branchement inconditionnel en cours» (UN BR CU)
signal actif lorsqu'un branchement conditionnel est en cours d'exécution.
«Branchement conditionnel pris» (CO BR TA):
signal actif lorsqu'un branchement conditionnel est détecté.
«Branchement programme à faire» (PGM BR GO):
signal actif lorsqu'un branchement doit être réalisé.
«Programme Arrêt» (PGM STP):
signal actif lors d'un arrêt de programme.
«Programme Attente» (PGM WAIT):
le programme attend (pas d'interruption, et niveau 5 masqué).
«Branchement, vider les registres POP» (BR. VID. POP):
signal actif pour vider les registres dans lesquels sont stockées les instructions à l'avance dans le cas d'un branchement.
«MIOH» réponse en attente MIOH REP PEN
MIOH attend réponse adaptateur.

Ces signaux sont fournis par l'unité de commande de la façon suivante:

Le programme se trouve en mémoire principale (mémoires 10 et 11), par un mécanisme de recherche d'instruction IPF 36, les instructions sont envoyées aux registres POP, 25 (fig. 2). L'instruction à exécuter est décodée, par le circuit de décodage d'instruction 37 pour générer une adresse de mot de commande dans la ROS: ADR.ROS, suite à l'adressage de la mémoire ROS, un mot de commande CW ROS à 108 bits est transféré dans le registre de sortie 41. Ce mot de commande est modifié par une logique 38 sous contrôle d'un circuit de contrôle 39 qui reçoit des indications de différents points de l'unité de commande (noté sur le bloc diagramme de circulation de données de la fig. 3) et des autres utilisateurs pour engendrer un mot de commande machine dans le registre 40. Ce sont certains des bits de ce mot de commande machine, fournis sur le bus 42, qui sont utilisés par le mécanisme de priorité. Les autres étant utilisés pour la commande de la circulation des données et d'autres pour la commande des mémoires conformément à la présente invention.

Cette disposition qui est classique dans les processeurs, n'est rappelée brièvement que pour montrer comment le dispositif de la présente invention s'intègre dans l'ensemble CCU.

Un dispositif de gestion des mémoires est prévu pour générer les signaux de contrôle nécessaires pour l'utilisation simultanée des deux mémoires conformément à la présente invention.

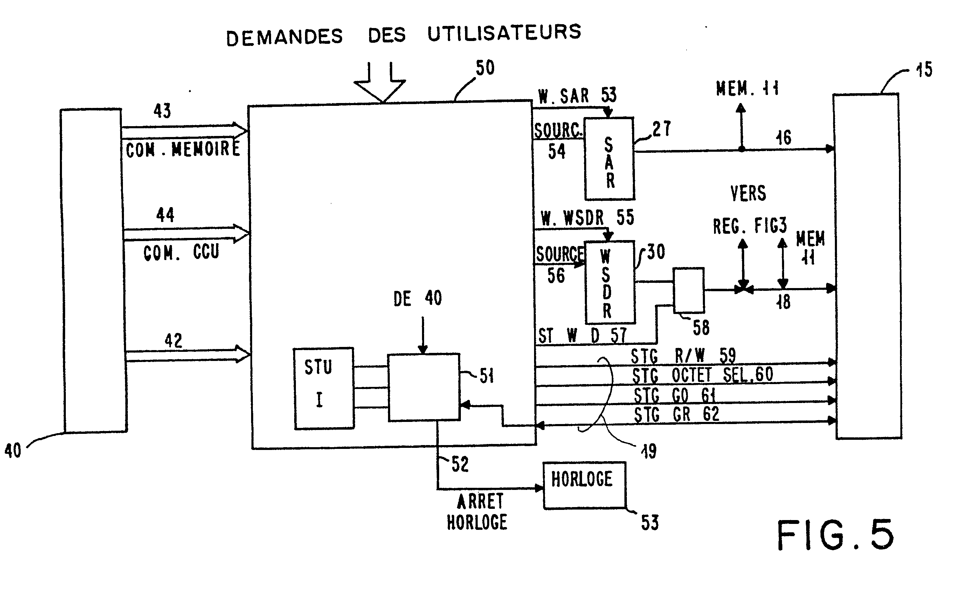

Le dispositif 50 représenté schématiquement sur la fig. 5 détermine l'utilisateur potentiel des mémoires le plus prioritaire et lui affecte la mémoire lente ou rapide suivant le cas, c'est-à-dire suivant l'information d'adresses, dès qu'elle se trouve disponible. La façon dont cette détermination est réalisée ne fait pas partie de la présente invention. Elle dépend de l'application particulière de l'invention. Dans l'application particulière choisie à titre d'exemple, ces utilisateurs sont:

a. Le mécanisme ROS qui peut avoir besoin de la mémoire pour:
  – l'exécution d'une instruction du programme,
  – recherche d'instruction résultant d'instructions de branchement,
  – opérations mémoire en connexion avec le système de maintenance,
  – mécanisme d'établissement de la table de débranchement BT MEC.

b. Le mécanisme de recherche préalable d'instruction.

c. Le mécanisme nécessaire pour la réalisation des opérations AIO.

Chacun des utilisateurs a un code à 3 bits indicateur d'utilisateur mémoire STUI. S'il n'y a pas d'utilisateur, les trois bits STUI A, B, C sont à zéro.

Le dispositif nécessaire au fonctionnement de la présente invention est le dispositif 51 d'arrêt de l'horloge de l'unité de contrôle. Ce dispositif envoie un signal sur sa ligne de sortie 52 pour arrêter l'horloge 53 de l'unité de contrôle dans certaines conditions.

Ce dispositif 51 sera détaillé ultérieurement, il reçoit, des bits de commande du mot de commande machine dans le registre 40.

L'interface entre le dispositif de gestion 50 et le circuit de commande mémoire 15 représenté sur la fig. 2 comprend:

Le registre d'adresses de mémoire SAR. Ce registre est écrit lorsque le bit dans le mot de commande machine ÉCRIRE SAR: W SAR, sur la ligne 53 est actif. Le contenu provient d'un des registres représenté sur la fig. 3, suivant le code disponible sur les lignes 54 SOURCE SAR qui indique quel registre doit être transféré dans le registre SAR 27. La sortie du registre SAR est envoyée sur le bus d'adresses qui va au circuit 15, et à la mémoire 11 directement.

Le registre WSDR 30, qui contient les données à envoyer à la mémoire pour les opérations d'écriture uniquement, est écrit lorsque le bit écriture W.WSDR est actif sur la ligne 55. Le contenu provient d'un des registres de la fig. 3 suivant le code indiqué par les bits sur les lignes SOURCE WSDR 56.

Le signal ST W D sur la ligne 57 de transfert des données pour écriture en mémoire, permet de faire passer le contenu du registre WSDR sur le bus 18 vers la mémoire 11 et le circuit 15 dans le sens écriture, par une porte 58.

Pour la lecture, les données arrivant sur le bus 18 sont envoyées aux registres appropriés sur la fig. 3.

Le bit sur la ligne 59 STG R/W indique si l'opération mémoire à réaliser est une opération lecture ou écriture.

Les bits sur le bus 60 STG OCTET SEL sélectionne l'octet à écrire en mémoire.

Le bit sur la ligne 61 STG GO indique le début d'une opération mémoire.

Les bits sur les lignes ou bus 53 à 57 et 59 à 61 sont fournis par le bus de sortie 43 contenant le mot de contrôle machine.

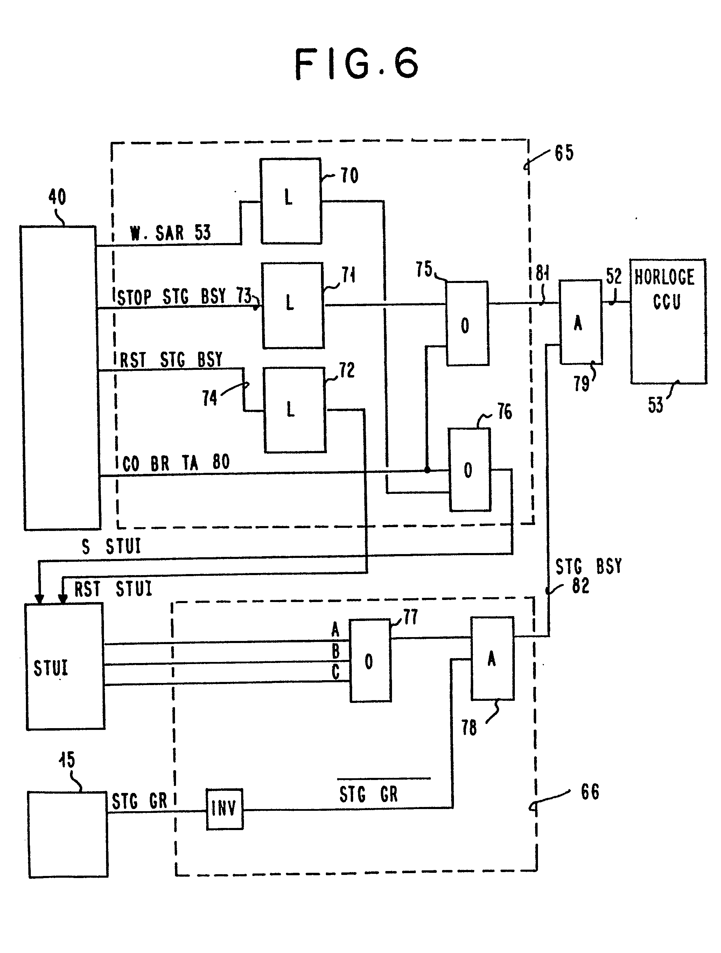

Le circuit de commande d'arrêt d'horloge 51 reçoit les trois bits indicateurs d'utilisateurs STU.I plus des bits du registre 40 qui seront détaillés en référence à la fig. 6.

Sur la ligne 62, les circuits de contrôle de mémoire 15 envoient un signal STG GR qui est actif dès que l'opération mémoire est terminée, c'est-à-dire que les données sont écrites en mémoire lors d'une opération d'écriture ou que les données sont disponibles sur le bus 18 pour une opération de lecture.

Le schéma détaillé du circuit 51 est représenté sur la fig. 6. Il comprend deux circuits logiques 65 et 66.

Dans le premier circuit 65 la bascule 70 reçoit le signal W SAR de la ligne 53. La bascule 71 reçoit un signal «Arrêt sur mémoire occupée» STOP STG BSY sur la ligne 73 venant du registre 40. Il résulte d'un bit écrit dans les mots de commande dans la mémoire ROS. Il détermine les opérations nécessitant les mémoires 10 ou 11. La bascule 72 reçoit un signal «restauration mémoire occupée» RST STG BSY sur la ligne 74 venant du registre 40, signal qui résulte d'un bit écrit dans le mot de commande utilisé dans les opérations où la condition mémoire occupée ne résulte pas d'une opération mémoire. C'est-à-dire où le signal STG GR: opération mémoire terminée, ne sera pas reçu de la mémoire.

Un circuit OU 75 reçoit la sortie de la bascule 71 et le bit «CO BR TA» 80 venant de 40 sur une des lines du bus 42 qui est actif lorsqu'un branchement conditionnel est détecté pour générer sur sa sortie 81 un signal indiquant qu'une opération nécessitant l'utilisation des mémoires est en cours. Un circuit OU 76 reçoit ce même signal CO BR TA et la sortie de la bascule 70. Dans le second circuit 66, le circuit OU 77 reçoit les trois lignes de sortie du circuit STUI.

Un circuit ET 78 recevant la sortie du circuit OU 77 et l'indication $\overline{\text{STG GR}}$ fournit l'indication de mémoire occupée STG BSY en 82.

Le circuit ET 79 recevant la sortie au circuit OU 75 et l'indication STG BSY fournit le signal d'arrêt d'horloge sur la ligne 52 pour arrêter l'horloge de l'unité de commande 53.

Le signal STP STG BSY ou le signal CO BR TA, qui implique une utilisation de la mémoire arrête l'horloge de l'unité de contrôle lorsque le signal STG BSY est actif, ceci par l'intermédiaire du circuit OU 75 et du circuit ET 79. En conséquence, l'exécution du mot de contrôle en cours est retardé jusqu'à la réception du signal STG GR, signifiant que l'opération mémoire est terminée, qui par l'intermédiaire du circuit ET 78 met à zéro le signal STG BSY.

Le signal STG BSY est actif dès que l'un des trois bits de l'indicateur d'utilisateur de mémoire STUI est actif, signifiant qu'il y a un utilisateur de la mémoire, et que le signal STG GR est à zéro, par l'intermédiaire du circuit OU 77 et du circuit ET 78. Les bits de l'indicateur STUI sont établis sous commande de la sortie du circuit OU 76, dès que le registre SAR est écrit, ce qui implique le début d'une opération mémoire. Le registre SAR est écrit soit lorsque le mot de commande dans la ROS l'exige (sortie de la bascule 70), soit lorsque des conditions spéciales sont remplies telles que CO BT TA. Le circuit OU 76 détecte cette condition.

Le signal restauration mémoire occupée RST STG BSY à la sortie de la bascule 72 restaure l'indicateur d'utilisateur de la mémoire STUI, ce qui met à zéro le signal STG BSY.

Le code dans la mémoire ROS contrôlant l'unité de commande est écrit pour être compatible avec les deux mémoires lente et rapide et utilise la possibilité d'arrêter l'horloge précédemment décrite.

Le tableau 1 représente le code utilisé pour réaliser une opération de chargement d'un mot entier: 4 octets. Les opérations mémoire s'effectuant sur la base de 4 octets en parallèle.

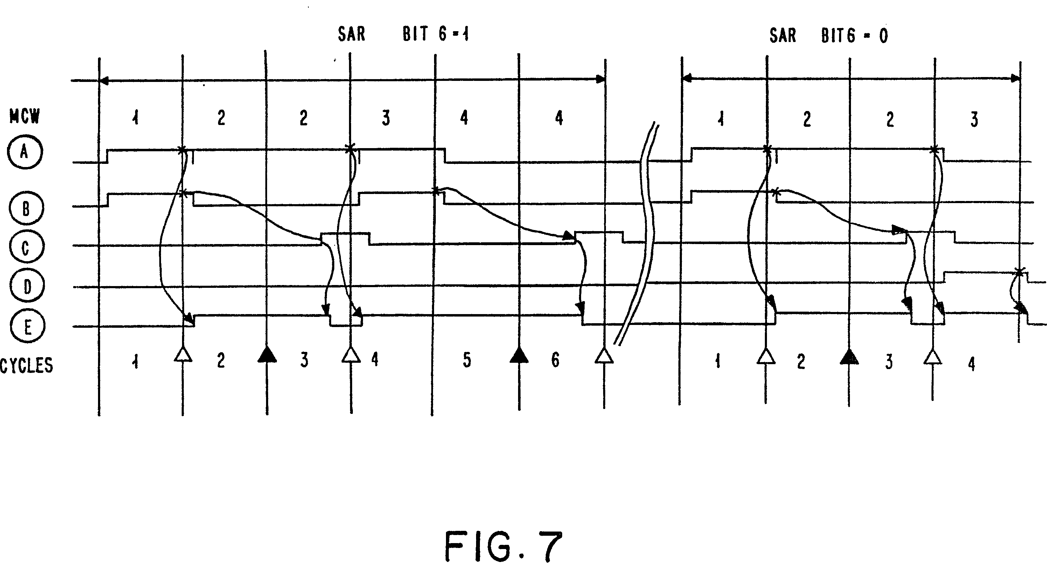

La fig. 7 représente le diagramme des temps dans l'unité CCU pendant l'exécution de cette opération.

Deux séquences sont exécutées suivant que le bit 6 du SAR est à zéro ou non. En effet, les deux derniers bits: bits 6 et 7 du SAR détermine quel est l'octet adressé dans un mot.

| octet 1 | octet 2 | octet 3 | octet 4 |
|---------|---------|---------|---------|

|  | SAR bit 6:0 | 0 | 1 | 1 |
|  | bit 7:0 | 1 | 0 | 1 |

En conséquence, si le bit 6 est à 1 il faut deux accès à la mémoire: un premier pour charger les octets 3 et 4 et un second pour charger les octets 1 et 2 du mot suivant. Si le bit 6 est à 0, les quatre octets peuvent être chargés en une seule opération.

TABLEAU 1

| SEQUENCE MOT CONTROLE | 1 | 2 | 3 | 3 | 4 |
|---|---|---|---|---|---|
| ADRESSE ROS MOT CONTROLE | 04B | 18F | 190 | 191 | 1E2 |
| ADRESSE SUIVANTE ROS | 18F | 190 | 1FF | 1E2 | 1FF |
| ROS BDY | | | fin d'opération si bit 6 SAR=0 | | fin d'opération si bit 6 SAR=1 |
| COMMANDE CIRCUIT 2–2 | le déplacement est ajouté à l'adresse de base contenue dans WKR | le registre Z est écrit avec les données venant de la mémoire | WKR est écrit avec le contenu du registre Z. | | octets 0, 1 de la mémoire sont combinés à l'octet X et écrit dans WKR adressé par l'instruction : |
| STOP STG BSY | STOP STG BSY | STOP STG BSY | | | STOP STG BSY |
| COMMANDE SAR | SAR est écrit avec résultat ALU | SAR est écrit par lui-même pour maintenir STG BSY | | SAR est incrémenté de 2 | |
| COMMANDE MEMOIRE | STG GO pour première opération lecture | | | STG GO pour deuxième opération lecture | |
| RESTAURATION STG BSY | | | RST STG BSY | | |
| TEST DEPAS-SEMENT SAR | Test | | | | |
| DECOUPAGE ROS: STB | | STB | | | |

Le tableau représente la succession des mots de contrôle de l'unité CCU et la fig. 7 représente la succession des cycles. Plusieurs cycles peuvent correspondre à un même mot de contrôle. A chaque mot de contrôle correspond une adresse dans la mémoire ROS et une seule. Chaque mot de contrôle contient l'adresse du mot de contrôle suivant. L'adresse 1FF n'est pas utilisée, elle signifie dernier mot de contrôle.

Le bit ROS BDY signifie fin d'opération.

Le bit de la mémoire ROS, STOP STG BSY, mot de contrôle 1 est présent pour arrêter l'horloge si la mémoire est occupée, en effet l'opération de lecture mémoire utilise les ressources mémoire et ne peut être exécutée si celle-ci est occupée. L'horloge redémarre lorsque la mémoire est libérée, de même, le bit de la mémoire ROS, STOP STG BSY, mot de contrôle 2 est présent pour arrêter l'horloge tant que les données attendues de la mémoire ne seront pas disponibles. Les bits précédemment cités 53, 73, 74 sont utilisés par le microcode contrôlant les opérations mémoires de manière:

1. à éviter toute contention entre plusieurs utilisateurs simultanés STOP STG BSY, mot de contrôle 1,
2. à attendre lors des opérations de lecture que les données en provenance de la mémoire soient disponibles STOP STG BSY mot de contrôle 2,
3. à maintenir la mémoire occupée avec un seul utilisateur avant de la mettre à la disposition de l'utilisateur suivant, COMMANDE SAR.

Après l'exécution du mot de contrôle 2, le branchement au mot de contrôle 3 d'adresse 190 ou 191 se fait de la manière suivante. Dans les deux cas l'adresse suivante ROS est présentée. Si le bit 6 du SAR est à 0, cette adresse est inchangée et le mot de contrôle 3 d'adresse 190 est exécutée. Si le bit 6 du SAR est à 1 le bit le moins significatif de l'adresse est forcé à 1, ce qui génère 191 au lieu de 190. Ceci est effectué sous le contrôle du bit de découpage ROS: STB.

Le diagramme des temps représenté sur la fig. 7 suppose que la mémoire adressée est celle de type lent et nécessite donc deux cycles pour une opération de lecture.

Le mot de contrôle 2 va donc durer deux cycles (cycles 2 et 3).

La forme d'onde A représente le signal d'écriture du registre SAR: W SAR. La forme d'onde B est le signal de démarrage STG GO, C le signal STG GR indiquant que l'opération mémoire est terminée, D est le signal de restauration de mémoire occupée RST STG BSY et le signal E est le signal mémoire occupée STG BSY.

Les flèches blanches indiquent que le test du bit mémoire occupée permet l'exécution du mot de commande suivant tandis que les flèches noires indiquent que ce test arrête l'horloge de l'unité CCU retardant ainsi l'exécution du mot de commande suivant.

Si on considère une mémoire encore plus lente l'horloge sera arrêtée pendant un nombre de cycles supérieur à deux. Par contre si l'opération avait été réalisée avec la mémoire rapide, opération de lecture en un cycle, l'horloge ne serait pas arrêtée, les données étant disponibles immédiatement.

Ce sont les signaux STOP STG BSY et STG BSY qui arrêtent l'horloge. Celle-ci redémarre que si le signal STG GR arrive ou le bit RST STG BSY est généré.

## Revendications

1. Unité de commande centrale (CCU) fonctionnant au rythme d'une horloge et sous contrôle d'un programme d'instructions emmagasiné dans une unité d'emmagasinage attachée à l'unité de commande par des bus d'adresses (16) de données (18) et de contrôle (19), ladite unité de commande étant du type microprogrammé et comprenant une mémoire permanente pour emmagasiner le microcode, des moyens pour générer lors de l'exécution de chaque instruction du programme emmagasiné, un mot de commande machine à plusieurs bits, et des moyens de commande d'arrêt d'horloge caractérisé en ce que:

l'unité d'emmagasinage comprend:

au moins une mémoire rapide (11) qui est affectée au stockage des instructions du programme et de données de traitement les plus fréquemment utilisées, ayant une première série de positions d'adresses,
au moins une mémoire lente (10) qui est affectée au stockage des instructions du programme et de données de traitement plus rarement utilisées, ayant une seconde série de positions d'adresses, lesdites mémoires rapide et lente étant adressées par les informations d'adresses sur le bus d'adresses, et,

l'unité de commande comprend:

un dispositif indicateur d'utilisateurs de mémoire (STUI) ayant plusieurs lignes de sortie (A, B, C), pour identifier l'utilisateur demandant une opération mémoire.

L'article publié dans l'IBM Technical Disclosure Bulletin Vol. 7 N° 9 en février 1985, pages 754–755, décrit un circuit de commande d'horloge permettant à une unité centrale d'être connectée à n'importe quel type de mémoires ou à plusieurs utilisateurs de caractéristiques différentes de se partager une même mémoire.

La réalisation de ce circuit dépend de la relation entre les vitesses de l'unité centrale et des mémoires susceptibles d'être connectées, ce qui le rend compliqué et nécessite de l'adapter en fonction de la relation de vitesses.

La demande de brevet européen EU-A-0 010 193 décrit un microprocesseur susceptible d'être connecté à deux mémoires de vitesse différente comportant un circuit de réglage du cycle du microprocesseur. Ce circuit ajuste la durée du prochain cycle en fonction du champ d'adresse contenu dans la microinstruction en cours d'exécution.

les moyens (51) de commande d'arrêt d'horloge comprennent:

un premier circuit logique (65) qui reçoit:

au moins un premier bit (73, 80) du mot de commande machine indiquant que l'opération en cours est une opération mémoire pour générer sur une première sortie, un signal indiquant qu'une opération utilisant l'une ou l'autre mémoire est en cours,

au moins un second bit (53) du mot de commande machine indiquant l'initialisation d'une opération mémoire pour générer sur une seconde sortie un signal (S STUI) pour rendre active au moins une des lignes de sortie du dispositif indicateur d'utilisateurs, et

un troisième bit du mot de commande machine indiquant que la condition mémoire occupée ne résulte pas d'une opération mémoire pour générer sur une troisième ligne de sortie un signal (RST STUI) pour rendre inactives les lignes de sortie du dispositif indicateur d'utilisateur

un second circuit logique (66), recevant les lignes de sortie du dispositif indicateur d'utilisateurs et générant en sortie un signal mémoire occupée (STG BSY, 82) tant que la fin d'opération mémoire n'est pas signalée, ou que les lignes de sortie du dispositif indicateur d'utilisateurs n'ont pas été rendu inactives

un troisième circuit logique (ET 79) recevant en entrées la première sortie du premier circuit logique et la sortie du second circuit logique et générant en sortie (52) le signal de commande d'arrêt d'horloge, lorsque les première et seconde sorties sont actives.

2. Unité selon l'une quelconque des revendications 1, 3, caractérisée en ce que:

lorsqu'une opération mémoire est terminée, les mémoires envoient par le bus de contrôle aux moyens de commande d'arrêt d'horloge, un signal indiquant la fin de l'opération mémoire (STG GR).

3. Unité selon la revendication 2, caractérisé en ce que le second circuit logique comprend un circuit OU (77) recevant en entrée les lignes de sortie du dispositif indicateur d'utilisateurs et un circuit ET (78) dont une entrée est connectée à la sortie dudit circuit OU (77) et l'autre entrée reçoit l'inverse du signal indiquant la fin de l'opération mémoire, la sortie du second circuit logique étant prise à la sortie dudit circuit ET.

4. Unité selon l'une quelconque des revendications précédentes, caractérisée en ce qu'elle est utilisée pour la commande d'un contrôleur de communications.

**Claims**

1. A clocked central control unit (CCU) operating under the control of a program stored in a storage unit attached to the control unit via an address bus (16), a data bus (18) and a control bus (19), said control unit being a microprogrammed type of unit and including a permanent storage for storing the microcodes, means for generating a multi-bit machine control word whenever an instruction in the stored program is executed, and means for inhibiting the clock, characterized in that:

said storage unit comprises:

at least one high-speed storage (11) for storing the most frequently used program instructions and data, said storage having a first set of address positions,

at least one low-speed storage (10) for storing less frequently used program instructions and data, and having a second set of address positions, both of said high-speed and low-speed storages being addressed by the address information on the address bus, and

said control unit comprises:

a storage user indicator (STUI) having several output lines (A, B, C) for identifying a user requesting a storage read or write operation,

said means (51) for inhibiting the clock comprises:

a first logic circuit (65) which receives:

at least a first bit (73, 80) of the machine control word indicating that the operation being performed is a storage read or write operation, which bit causes a signal indicating that an operation involving either storage is in progress to be generated on a first output,

at least a second bit (53) of the machine control word indicating that a storage read or write operation has been initiated, which second bit causes a signal (S STUI) activating at least one of the output lines of said storage user indicator to be generated on a second output of said logic circuit, and

a third bit of the machine control word indicating that the Storage Busy condition does not result from a storage read or write operation, which third bit causes a signal (RST STUI) deactivating the output lines of said storage user indicator to be generated on a third output line of said logic circuit,

a second logic circuit (66) which receives the signals on the output lines of the storage user indicator and generates a Storage Busy signal (STG BSY, 82) as long as completion of the storage read or write operation has not been signaled or as long as the output lines of said storage user indicator have not been deactivated,

a third logic circuit (AND 79) which receives as inputs the first output from said first logic circuit and the output from said second logic circuit, and which provides on its output (52) a clock inhibiting signal where said first and second outputs are active.

2. A unit according to any one of claims 1, 3, characterized in that:

upon completion of a storage read or write operation, the storages supply said clock inhibiting means, via the control bus, with a signal indicating such completion (STG GR).

3. A unit according to claim 2, characterized in that said second logic circuit includes an OR circuit (77) which receives as inputs the signals on the output lines of said storage user indicator and an AND circuit (78) an input of which is connected to the output of said OR circuit (77) and the other input of which receives the inverse of the signal indicating completion of the read or write operation, the output of said second logic circuit being provided at the output of said AND circuit.

4. A unit according to any one of the preceding claims, characterized in that it is used to control a communications controller.

## Patentansprüche

1. Zentrale Steuereinheit, die nach dem Rhythmus eines Taktgebers und unter Kontrolle eines in einer Speichereinheit eingelagerten und über mehrere Adressen- (16), Daten- (18) und Kontrollbusglieder (19) mit der Steuereinheit verbundenen Befehlsprogramms arbeitet, wobei die genannte Steuereinheit vom mikroprogrammierten Typ ist und einen Permanentspeicher zum Einlagern des Microcodes, Mittel um bei der Ausführung jedes Befehls vom gespeicherten Programm ein Mehrbit-Befehlswort für die Maschine zu erstellen und Steuermittel zum Anhalten des Taktgebers aufweist, dadurch gekennzeichnet, dass die Speichereinheit folgendes umfasst:

zumindest einen Speicher mit schnellem Zugriff (11), der zum Einlesen der am häufigsten gebrauchten Programmbefehle und Verfahrensdaten vorgesehen ist, und der eine erste Reihe von Adressenpositionen beinhaltet,

zumindest einen Speicher mit langsamem Zugriff (10), der zum Einlesen der seltener gebrauchten Programmbefehle und Verfahrensdaten vorgesehen ist, und der eine zweite Reihe von Adressenpositionen beinhaltet, wobei die genannten Speicher mit schnellem und mit langsamem Zugriff von auf dem Adressenbus laufenden Adresseninformationen adressiert werden, und

dass die Steuereinheit folgendes umfasst:

eine Anzeigevorrichtung der Speicherbenutzer (STUI) mit mehreren Ausgangslinien (A, B, C), um den Benutzer identifizieren zu können, der eine Speicheroperation verlangt, und

Steuermittel zum Anhalten des Taktgebers, zu denen gehören:

ein erstes Verknüpfungsglied (65), das empfängt:

zumindest ein erstes Bit (73, 80) des Maschinen-Steuerwortes, das angibt, dass die laufende Operation eine Speicheroperation ist, um an einem ersten Ausgang ein Signal zu erstellen, mit dem angezeigt wird, dass die laufende Operation den einen oder den anderen Speicher benutzt,

zumindest ein zweites Bit (53) des Maschinen-Steuerwortes, das die Initialisierung einer Speicheroperation anzeigt, um an einem zweiten Ausgang ein Signal (S STUI) zu erstellen, das wenigstens eine der Ausgangsleitungen der Benutzer-Anzeigevorrichtung aktiviert ist, und

ein drittes Bit des Maschinen-Steuerwortes, das anzeigt, dass die Bedingung ‹Speicher arbeitet› nicht das Ergebnis einer Speicheroperation ist mit dem Zweck, auf einer dritten Ausgangsleitung ein Signal (RST STUI) zu erstellen, das die Ausgangsleitungen der Benutzer-Anzeigevorrichtung inaktiviert.

ein zweites Verknüpfungsglied (66), das die Ausgangsleitungen der Benutzer-Anzeigevorrichtung empfängt und als Ausgang ein Signal ‹Speicher arbeitet› (STG BSY, 82) erstellt, das ansteht, solange das Ende der Speicheroperation nicht gemeldet ist oder solange die Ausgangsleitungen der Benutzer-Anzeigevorrichtung nicht inaktiviert sind.

ein drittes Verknüpfungsglied (ET 79), das als Eingang den ersten Ausgang des ersten Verknüpfungsgliedes und den Ausgang des zweiten Verknüpfungsgliedes empfängt, um als Ausgang (52) das Steuerwort zum Anhalten des Taktgebers zu erzeugen, wenn der erste und der zweite Ausgang aktiviert sind.

2. Steuereinheit nach einem der Ansprüche 1, 3, dadurch gekennzeichnet, dass:

nach Beendigung einer Speicheroperation die Speicher über den Kontrollbus den Steuermitteln zum Anhalten des Taktgebers ein Signal übermitteln, das das Ende der Speicheroperation anzeigt (STG GR).

3. Steuereinheit nach Anspruch 2, dadurch gekennzeichnet, dass das zweite Verknüpfungsglied eine ODER-Schaltung (77) aufweist, die als Eingang die Ausgangsleitungen der Benutzer-Anzeigevorrichtung sowie eine UND-Schaltung (78) empfängt, bei der ein Eingang mit dem Ausgang der genannten ODER-Schaltung (77) verbunden ist während der andere Eingang den Kehrwert des Signals erhält, das das Ende der Speicheroperation angibt, wobei der Ausgang des zweiten Verknüpfungsglieds am Ausgang der genannten UND-Schaltung anliegt.

4. Steuereinheit nach allen vorstehenden Ansprüchen, dadurch gekennzeichnet, dass sie zur Steuerung eines Verkehrs-Kontrollers benutzt wird.

# FIG. 1

LIGNES  COMMUNICATIONS

FIG.2

FIG.3

# FIG.4

0 082 903

17

DEMANDES DES UTILISATEURS

MEM. 11

W.SAR 53

43

COM.MEMOIRE

SOURC.
54

S
A
R
27

16

44

COM. CCU

VERS

REG. FIG3

MEM
11

W.WSDR 55

SOURCE
56

W
S
D
R
30

18

DE 40

42

ST W D 57

58

STU
I

51

STG R/W 59

STG OCTET SEL.60

STG GO 61

STG GR 62

40

15

19

52

ARRET
HORLOGE

HORLOGE

53

FIG.5

0 082 903

# FIG.6

FIG. 7